# EUROPEAN PATENT APPLICATION

(11) **EP 4 099 251 A1**
(43) Date of publication of application: **07.12.2022**
(21) Application number: 21747396.6
(22) Date of filing: 25.01.2021
(51) Int. Cl.: G06Q 30/02, G06Q 50/10

(54) **PREDICTION DEVICE, PREDICTION METHOD, AND PREDICTION PROGRAM**

(30) Priority: 28.01.2020 JP 2020011544
(71) Applicant: DENTSU INC., Tokyo 105-7001 (JP)
(72) Inventor: KISHIMOTO, Wataru, Tokyo 105-7001 (JP)
(74) Representative: SSM Sandmair
(86) International application number: PCT/JP2021/002454
(87) International publication number: WO 2021/153505

(57) **Abstract**

A storage unit (111) stores broadcast contact information (121) indicating a degree of contact from receivers for each of a plurality of pieces of broadcast information broadcasted by a broadcast medium. A calculation unit (112) calculates a statistic by using broadcast contact information of first broadcast information included in the plurality of pieces of broadcast information and broadcast contact information of second broadcast information broadcasted after the first broadcast information. The statistic to be calculated is a statistic having a larger contribution of the broadcast contact information of the second broadcast information than a contribution of the broadcast contact information of the first broadcast information. A prediction unit (113) determines predicted contact information indicating a degree of contact from receivers for broadcasting-scheduled broadcast information based on the statistic.

## Description

### [Technical Field]

The present invention relates to a prediction apparatus, a prediction method, and a prediction program.

### [Background Art]

An advertisement slot optimization system has been known which predicts the audience rating of an advertisement for viewers of a television or the like with high precision and optimizes advertisement slots in broadcast media such as a television (see Patent Document 1, for example).

In this advertisement slot optimization system, an advanced rating prediction apparatus predicts a target audience rating with higher precision than a prescribed precision and/or receives audience rating data which is measured by a third-party organization in real time. Then, the advanced rating prediction apparatus transmits predicted audience rating data of an advertisement slot and/or audience rating data immediately before broadcast to a target actual optimization apparatus. The target actual optimization apparatus redistributes the allocation of material to advertisement slots based on third data acquired by evaluating a difference between first data and second data for each of the advertisement slots.

An advertisement to be broadcasted on a television or the like may be called a commercial message (CM).

### [Prior Art Documents]

### [Patent Document]

[Patent Document 1]
International Publication No. WO 2018/131576 pamphlet

### [Summary of Invention]

### [Technical Problem]

In a case of the advanced rating prediction apparatus according to Patent Document 1 described above, a predicted audience rating with a desired precision is not always acquired under some conditions relating to a scheduled broadcasting date of a CM.

Such a problem occurs in a case where audience ratings of various pieces of broadcast information including a broadcast program are to be predicted, without limiting to the case where an audience rating of a CM is to be predicted. Also, such a problem occurs in a case where various kinds of broadcast contact information indicating a degree of contact from receivers with respect to broadcast information are to be predicted, without limiting to the case where an audience rating of broadcast information is to be predicted.

According to one aspect, it is an object of the present invention to predict broadcast contact information with high precision in accordance with a condition relating to broadcast information.

### [Solution to Problem]

According to one proposal, a prediction apparatus includes a storage unit, a calculation unit, and a prediction unit. The storage unit stores broadcast contact information indicating a degree of contact from receivers for each of a plurality of pieces of broadcast information broadcasted by a broadcast medium.

The calculation unit calculates a statistic by using broadcast contact information of first broadcast information included in the plurality of pieces of broadcast information and broadcast contact information of second broadcast information broadcasted after the first broadcast information. The statistic to be calculated is a statistic having a larger contribution of the broadcast contact information of the second broadcast information than a contribution of the broadcast contact information of the first broadcast information. The prediction unit determines predicted contact information indicating a degree of contact from receivers for broadcasting-scheduled broadcast information based on the statistic.

According to another proposal, a prediction apparatus includes a storage unit, a calculation unit, and a prediction unit. The storage unit stores calendar information including a national holiday and broadcast contact information indicating a degree of contact from receivers for each of a plurality of pieces of broadcast information broadcasted by a broadcast medium.

The calculation unit excludes broadcast contact information of broadcast information broadcasted on the national holiday from the broadcast contact information of each of the plurality of pieces of broadcast information. Then, the calculation unit calculates a statistic by using broadcast contact information of first broadcast information of remaining broadcast contact information and broadcast contact information of second broadcast information broadcasted after the first broadcast information. The prediction unit determines predicted contact information indicating a degree of contact from receivers for broadcasting-scheduled broadcast information based on the statistic.

According to another proposal, a prediction apparatus includes a storage unit, a calculation unit, and a prediction unit. The storage unit stores calendar information including a plurality of days of week and broadcast contact information indicating a degree of contact from receivers for each of a plurality of pieces of broadcast information broadcasted by a broadcast medium on broadcasting dates including the plurality of days of week.

The calculation unit extracts broadcast contact information of pieces of broadcast information broadcasted on a prescribed day of week among the plurality of days of week from the broadcast contact information of each of the plurality of pieces of broadcast information. Then, the calculation unit calculates a statistic by using broadcast contact information of first broadcast information of extracted broadcast contact information and broadcast contact information of second broadcast information broadcasted after the first broadcast information. The prediction unit determines predicted contact information indicating a degree of contact from receivers for broadcasting-scheduled broadcast information to be broadcasted on the prescribed day of week based on the statistic.

According to another proposal, a prediction apparatus includes a storage unit, an estimation unit, and a prediction unit. The storage unit stores broadcast contact information indicating a degree of contact from receivers for each of a plurality of pieces of broadcast information broadcasted by a broadcast medium and weather forecast information indicating a weather on a scheduled broadcasting date on which broadcasting-scheduled broadcast information is to be broadcasted.

The estimation unit estimates an amount of precipitation on the scheduled broadcasting date based on the weather forecast information. The prediction unit determines predicted contact information indicating a degree of contact from receivers for the broadcasting-scheduled broadcast information based on the broadcast contact information of each of the plurality of pieces of broadcast information and the amount of precipitation on the scheduled broadcasting date.

### [Advantageous Effect of Invention]

According to one aspect, broadcast contact information can be predicted with high precision in accordance with a condition relating to broadcast information.

### [Brief Description of Drawings]

[Figure 1] Figure 1 is a functional configuration diagram of a first prediction apparatus.
[Figure 2] Figure 2 is a functional configuration diagram of a second prediction apparatus.
[Figure 3] Figure 3 is a functional configuration diagram of a third prediction apparatus.
[Figure 4] Figure 4 is a functional configuration diagram of a fourth prediction apparatus.
[Figure 5] Figure 5 is a functional configuration diagram of a prediction system.
[Figure 6] Figure 6 is a diagram illustrating actual audience ratings of an across-the-board program.
[Figure 7] Figure 7 is a diagram illustrating temporal changes of actual audience ratings on a weekday and a national holiday.
[Figure 8] Figure 8 is a diagram illustrating temporal changes of actual audience ratings on a sunny day and a rainy day.
[Figure 9] Figure 9 is a diagram illustrating amount-of-precipitation estimation processing.
[Figure 10] Figure 10 is a diagram illustrating a prediction model generated by ensemble learning.
[Figure 11] Figure 11 is a flowchart of prediction processing.
[Figure 12] Figure 12 is a hardware configuration diagram of an information processing apparatus.

### [Description of Embodiments]

Embodiments are described in detail below with reference to drawings.

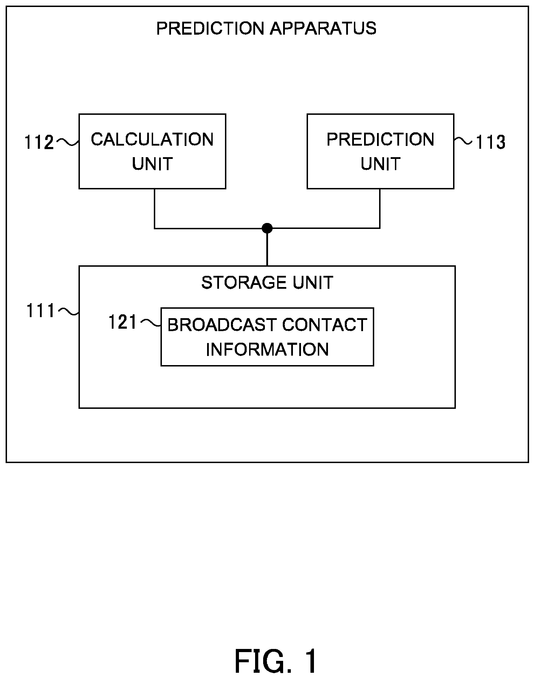

Figure 1 illustrates a functional configuration example of a first prediction apparatus according to an embodiment. A prediction apparatus 101 in Figure 1 includes a storage unit 111, a calculation unit 112, and a prediction unit 113. The storage unit 111 stores broadcast contact information 121 indicating a degree of contact from receivers for each of a plurality of pieces of broadcast information broadcasted by a broadcast medium.

The calculation unit 112 calculates a statistic by using broadcast contact information of first broadcast information included in the plurality of pieces of broadcast information and broadcast contact information of second broadcast information broadcasted after the first broadcast information. The statistic to be calculated is a statistic having a larger contribution of the broadcast contact information of the second broadcast information than a contribution of the broadcast contact information of the first broadcast information. The prediction unit 113 determines predicted contact information indicating a degree of contact from receivers for broadcasting-scheduled broadcast information based on the statistic.

With the prediction apparatus 101 in Figure 1, broadcast contact information can be predicted with high precision in accordance with a condition relating to broadcast information.

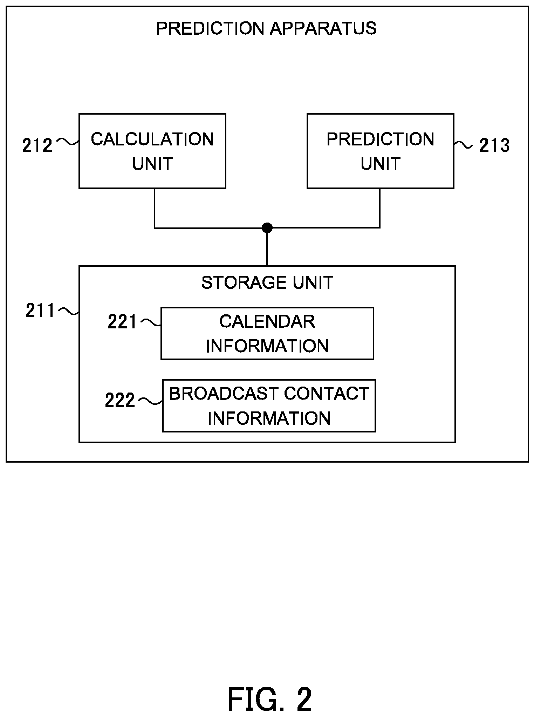

Figure 2 illustrates a functional configuration example of a second prediction apparatus according to an embodiment. A prediction apparatus 201 in Figure 2 includes a storage unit 211, a calculation unit 212, and a prediction unit 213. The storage unit 211 stores calendar information 221 including a national holiday and broadcast contact information 222 indicating a degree of contact from receivers for each of a plurality of pieces of broadcast information broadcasted by a broadcast medium. A substitute holiday is also included in national holidays.

The calculation unit 212 excludes broadcast contact information of broadcast information broadcasted on the national holiday from the broadcast contact information 222. Then, the calculation unit 212 calculates a statistic by using broadcast contact information of first broadcast information of remaining broadcast contact information and broadcast contact information of second broadcast information broadcasted after the first broadcast information. The prediction unit 213 determines predicted contact information indicating a degree of contact from receivers for broadcasting-scheduled broadcast information based on the statistic.

With the prediction apparatus 201 in Figure 2, broadcast contact information can be predicted with high precision in accordance with a condition relating to broadcast information.

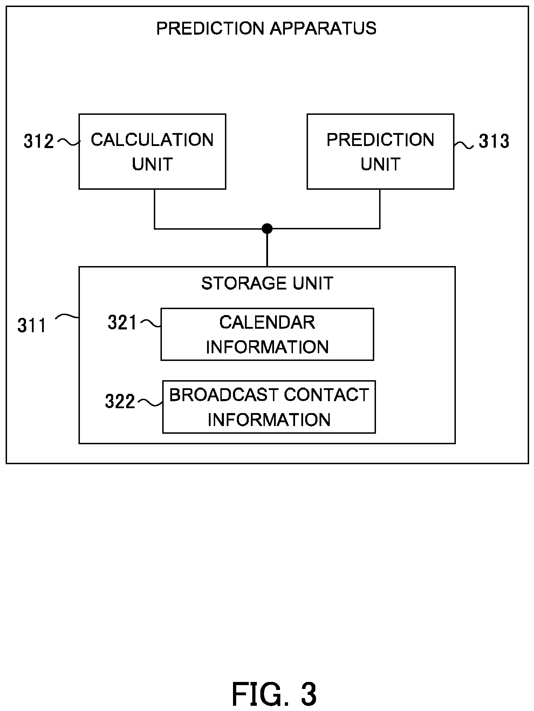

Figure 3 illustrates a functional configuration example of a third prediction apparatus according to an embodiment. A prediction apparatus 301 in Figure 3 includes a storage unit 311, a calculation unit 312, and a prediction unit 313. The storage unit 311 stores calendar information 321 including a plurality of days of week and broadcast contact information 322 indicating a degree of contact from receivers for each of a plurality of pieces of broadcast information broadcasted by a broadcast medium on broadcasting dates including the plurality of days of week.

The calculation unit 312 extracts broadcast contact information of pieces of broadcast information broadcasted on a prescribed day of week among the plurality of days of week from the broadcast contact information 322. Then, the calculation unit 312 calculates a statistic by using broadcast contact information of first broadcast information of extracted broadcast contact information and broadcast contact information of second broadcast information broadcasted after the first broadcast information. The prediction unit 313 determines predicted contact information indicating a degree of contact from receivers for broadcasting-scheduled broadcast information to be broadcasted on a prescribed day of week based on the statistic.

With the prediction apparatus 301 in Figure 3, broadcast contact information can be predicted with high precision in accordance with a condition relating to broadcast information.

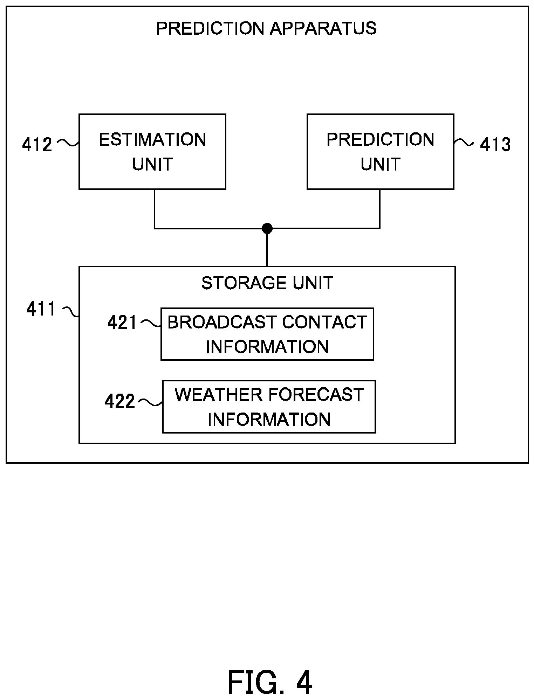

Figure 4 illustrates a functional configuration example of a fourth prediction apparatus according to an embodiment. A prediction apparatus 401 in Figure 4 includes a storage unit 411, an estimation unit 412, and a prediction unit 413. The storage unit 411 stores broadcast contact information 421 indicating a degree of contact from receivers for each of a plurality of pieces of broadcast information broadcasted by a broadcast medium and weather forecast information 422 indicating a weather on a scheduled broadcasting date on which broadcasting-scheduled broadcast information is to be broadcasted.

The estimation unit 412 estimates an amount of precipitation on the scheduled broadcasting date based on the weather forecast information 422. The prediction unit 413 determines predicted contact information indicating a degree of contact from receivers for the broadcasting-scheduled broadcast information based on the broadcast contact information 421 and the amount of precipitation on the scheduled broadcasting date.

With the prediction apparatus 401 in Figure 4, broadcast contact information can be predicted with high precision in accordance with a condition relating to broadcast information.

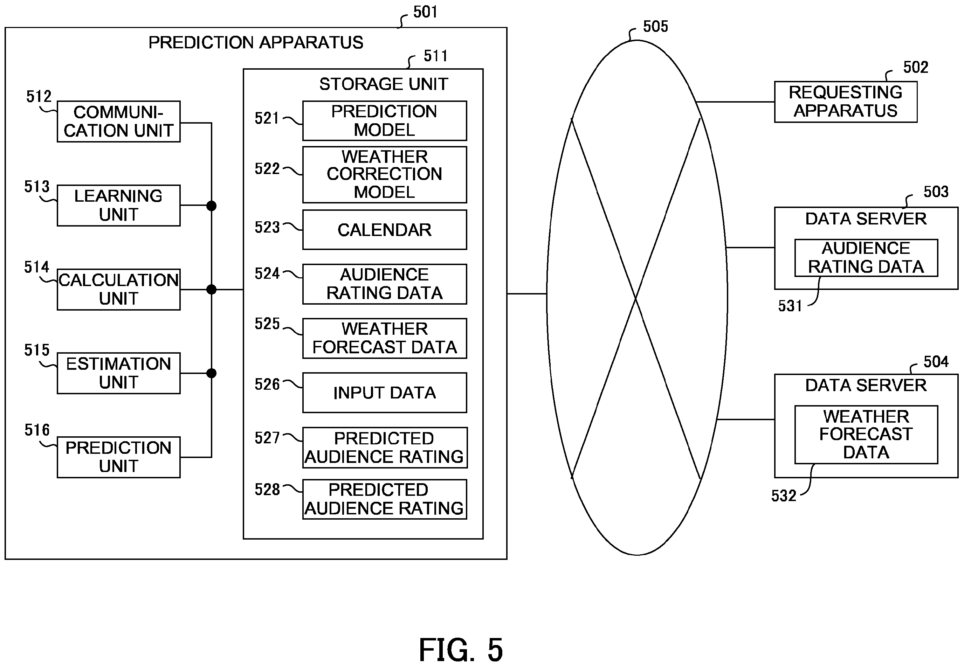

Figure 5 illustrates a functional configuration example of a prediction system according to an embodiment. The prediction system in Figure 5 includes a prediction apparatus 501, a requesting apparatus 502, a data server 503, and a data server 504. The prediction apparatus 501 can communicate with the requesting apparatus 502, the data server 503 and the data server 504 over a communication network 505. The communication network 505 is, for example, a wide area network (WAN) or a local area network (LAN).

The requesting apparatus 502 may be an information processing apparatus (a computer) of a broadcaster, may be an information processing apparatus of an advertisement company, or may be an information processing apparatus of a commercial sponsor. The prediction apparatus 501 corresponds to the prediction apparatus 101 in Figure 1, the prediction apparatus 201 in Figure 2, the prediction apparatus 301 in Figure 3 and the prediction apparatus 401 in Figure 4 and includes a storage unit 511, a communication unit 512, a learning unit 513, a calculation unit 514, an estimation unit 515, and a prediction unit 516.

The storage unit 511 corresponds to the storage unit 111 in Figure 1, the storage unit 211 in Figure 2, the storage unit 311 in Figure 3 and the storage unit 411 in Figure 4. The calculation unit 514 corresponds to the calculation unit 112 in Figure 1, the calculation unit 212 in Figure 2 and the calculation unit 312 in Figure 3. The estimation unit 515 corresponds to the estimation unit 412 in Figure 4. The prediction unit 516 corresponds to the prediction unit 113 in Figure 1, the prediction unit 213 in Figure 2, the prediction unit 313 in Figure 3 and the prediction unit 413 in Figure 4.

The requesting apparatus 502 transmits, to the prediction apparatus 501, a processing request that requests a predicted audience rating of a broadcasting-scheduled broadcast program to be broadcasted by a broadcast medium. The broadcasting-scheduled broadcast program may be all programs to be broadcasted on a prediction target date. The broadcast medium is a transmission signal to be used in, for example, television broadcasting, radio broadcasting, or Internet broadcasting, and the television broadcasting includes terrestrial broadcasting and satellite broadcasting. The broadcast medium may be a transmission signal of wireless broadcasting or may be a transmission signal of wire broadcasting.

The broadcast program is an example of the broadcast information, and audience who views or listens to the broadcast program is an example of the receiver who receives the broadcast information. An audience rating is an example of the broadcast contact information, and a predicted audience rating is an example of the predicted contact information. Hereinafter, the broadcast program may be simply described as a program.

The data server 503 stores audience rating data 531 of a program broadcasted in the past. The calculation unit 514 in the prediction apparatus 501 transmits a data request to the data server 503 via the communication unit 512 and obtains audience rating data 531 from the data server 503. Then, the calculation unit 514 stores the obtained audience rating data 531 as audience rating data 524 in the storage unit 511. The storage unit 511 stores the audience rating data 524. The audience rating data 524 is an example of the broadcast contact information 121 in Figure 1, broadcast contact information 222 in Figure 2, the broadcast contact information 322 in Figure 3, and the broadcast contact information 421 in Figure 4.

The data server 504 stores weather forecast data 532 announced by, for example, the Meteorological Agency. The estimation unit 515 transmits a data request to the data server 504 via the communication unit 512 and obtains weather forecast data 532 from the data server 504. Then, the estimation unit 515 stores the obtained weather forecast data 532 as weather forecast data 525 in the storage unit 511. The storage unit 511 stores the weather forecast data 525. The weather forecast data 525 is an example of the weather forecast information 422 in Figure 4.

The storage unit 511 further stores a prediction model 521, a weather correction model 522, a calendar 523, and input data 526. The prediction model 521 is a learned model generated by learning processing and generates a predicted audience rating 527 from the input data 526. The predicted audience rating 527 is an example of precorrection contact information or predicted contact information.

The learning unit 513 generates the prediction model 521 by performing learning processing on audience rating data to be learned in advance and stores the prediction model 521 in the storage unit 511. Supervised machine learning, for example, is used as the learning processing, and a neural network, a random forest, a linear regression model or the like, for example, is used as the prediction model 521.

For example, audience ratings of all programs broadcasted within a prescribed period of time in the past are used as the audience rating data to be learned. The audience rating data to be learned includes an audience rating input to the prediction model 521 and training data for the predicted audience rating 527 generated by the prediction model 521. For example, an audience rating per minute on a prediction target date, a program average audience rating and an end-time audience rating of all programs broadcasted on the prediction target date, a time shift audience rating on the prediction target date, or an average audience rating for each prescribed time at the prediction target date is used as the predicted audience rating 527.

The predicted audience rating 527 is predicted for each target determined by an attribute of audience. As an attribute of audience, a type of household or individual, gender, age, occupation, presence of a child or children, age or ages of the child or children or the like is used. Examples of the target include households, all individuals (four years old or above), 20-34 year-old males, 20-34 year-old females, 20-34 year-old males and females, housewives, and housewives (with 0-3 year-old child or children). The target may be called a target tier.

As an index of prediction precision of the prediction model 521, a root mean squared error (RMSE) or a correlation coefficient between the predicted audience rating 527 and an actually measured audience rating (actual audience rating) may be used. As the difference between the RMSE and 0 decreases, the prediction precision increases, and as the difference between the correlation coefficient and 1 decreases, the prediction precision increases. The learning unit 513 can generate the prediction model 521 having high prediction precision by evaluating the prediction model 521 based on the index described above.

The prediction model 521 performs recent trend prediction of a real time audience rating, a recent trend prediction of a time shift audience rating, a long-term trend prediction of a real time audience rating, or a long-term trend prediction of a time shift audience rating. An audience rating of a program on a near scheduled broadcasting date is predicted in the recent trend prediction, and an audience rating of a program on a far scheduled broadcasting date is predicted in the long-term trend prediction. The recent trend prediction is prediction processing that predicts an audience rating with high precision based on program information, a past audience rating, and Internet information, and the long-term trend prediction is prediction processing that predicts an audience rating in consideration of secular transitions or seasonal changes of an audience rating.

For example, the prediction target date in the recent trend prediction may be 1 to 7 days later from the present time, and the prediction target date in the long-term trend prediction may be 8 to 70 days later from the present time. As the time shift audience rating, a C7 audience rating, for example, is used.

The weather correction model 522 is a learned model generated by learning processing and generates a precipitation pattern from the weather forecast data 525. The learning unit 513 generates the weather correction model 522 by performing, in advance, learning processing on weather forecast data to be learned and stores the weather correction model 522 in the storage unit 511.

The calendar 523 is an example of the calendar information 221 in Figure 2 and the calendar information 321 in Figure 3 and includes information by which seven days of the week including Monday through Sunday and various national holidays can be identified. In a case where the prediction model 521 performs the recent trend prediction of a real time audience rating, the input data 526 includes, for example, program information, a past audience rating, and Internet information, and a program average audience rating and an end-time audience rating of all programs, for example, are used as the predicted audience rating 527.

The program information included in the input data 526 includes, for example, broadcast station information, a broadcasting time zone, a broadcasting time length, a program category, day-of-week information, an A time flag, a long-length flag, a national holiday flag, a talent power and a word power of a prediction target program.

The broadcast station information is identification information by which a broadcast station that broadcasts the program is identified. The broadcasting time zone indicates a time zone in which the program is to be broadcasted and includes a start time and an end time. The broadcasting time length indicates a period of time from the start time to the end time of the program.

The program category indicates a category to which the program belongs. As the program category, for example, drama, entertainment, news, sport, movie or the like is used. The program category may be a category written on a program table or may be a category set by a audience rating research company. However, for a special program or a new program, its category on a program table may be blank. Accordingly, the calculation unit 514 estimates a program category of the special program or new program from program description information included in the program table by using a category filter such as a Bayesian filter and records the estimated program category in the input data 526. The program description information is text information that describes details of a program.

The day-of-week information indicates a day of the week of the prediction target date. The A time flag is a flag indicating whether the broadcasting time zone belongs to A time. The A time is a time zone at the highest charge rank of advertisement charges. The long-length flag is a flag indicating whether the program is a long program or not. The national holiday flag is a flag indicating whether the prediction target date is a national holiday or not.

The talent power indicates an evaluation value of the program based on a talent name extracted from the program description information included in the program table. The audience rating of a program in which a popular talent appears tends to be higher than the audience rating of a program in which the talent does not appear. Accordingly, a score corresponding to the talent name included in the program description information is added to the talent power of the program.

The word power indicates an evaluation value of the program based on a keyword extracted from the program description information included in the program table. The audience rating of a program with program description information including a specific keyword tends to be higher than the audience rating of a program with program description information not including the keyword. Accordingly, a score corresponding to the specific keyword included in the program description information is added to the word power of the program. Examples of the specific keyword in, for example, a sport program include "figure skating", "grand prix series", "back-to-back titles".

The past audience rating included in the input data 526 includes, for example, a program average audience rating 3 to 10 weeks ago, an end-time audience rating 3 to 10 weeks ago, an average audience rating of the same date of the previous year, and an average audience rating of the same time zone of the previous year. The past audience rating further includes an immediately-near moving average audience rating, a moving average audience rating on the same day of the week, a missing flag 1, a moving average audience rating on the same day of the week and the same time zone, and a missing flag 2. The immediately-near moving average audience rating, the moving average audience rating on the same day of the week, and the moving average audience rating on the same day of the week and the same time zone are examples of the statistic of the broadcast contact information.

The program average audience rating 3 to 10 weeks ago indicates a program average audience rating of a program in each of the target timeslot, the competing timeslot, the previous timeslot, and the previous competing timeslot which are broadcasted 3 to 10 weeks ago from the prediction target date. The end-time audience rating 3 to 10 weeks ago indicates a audience rating at the end time of the program of the target timeslot broadcasted 3 to 10 weeks ago from the prediction target date. The average audience rating of the same date of the previous year indicates an average audience rating on the same day of the previous year. The average audience rating of the same time zone of the previous year indicates an average audience rating in the same time zone of the previous year.

The immediately-near moving average audience rating indicates a moving average of program average audience ratings of N broadcasts (where N is an integer greater than or equal to 2) immediately near the prediction target date. The N broadcasts are broadcasts of a program of the target timeslot and are extracted in accordance with broadcast intervals for each program such as a daily program, a weekly program, a yearly program or an irregular program. The N broadcasts immediately near the prediction target date may be called "last N broadcasts". The calculation unit 514 calculates a program average audience rating for each of the last N broadcasts and calculates an immediately-near moving average audience rating by using the program average audience ratings of the N broadcasts.

The moving average audience rating on the same day of the week indicates a moving average audience rating of the last N broadcasts corresponding to the same day of the week as that of the prediction target date. The missing flag 1 is a flag indicating the presence/absence of a program broadcasted on the same day of the week as that of the prediction target date. The moving average audience rating on the same day of the week and the same time zone indicates a moving average audience rating of the last N broadcasts corresponding to the same day of the week and the same time zone as those of the prediction target date. The missing flag 2 is a flag indicating the presence/absence of a program broadcasted on the same day of the week and the same time zone as those of the prediction target date.

As the moving average, for example, a simple moving average or a weighted moving average can be used. As the weighted moving average, for example, a linearly weighted moving average or an exponentially weighted moving average can be used. A weight of the weighted moving average is set so as to be larger for later broadcasting dates. The moving average audience rating calculated by a weighted moving average method is an example of the statistic having a larger contribution of the broadcast contact information of the second broadcast information broadcasted after the first broadcast information than a contribution of the broadcast contact information of the first broadcast information.

Because, by using the weighted moving average method, a contribution that a broadcast on a late broadcasting date gives to the moving average audience rating is larger than a contribution that a broadcast on an early broadcasting date gives to the moving average audience rating, a moving average audience rating largely reflecting the recent viewing or listening trend can be acquired. Thus, the recent viewing or listening trend is easily reflected on the predicted audience rating 527, and the precision of prediction improves. A plurality of moving average audience ratings for different N values may also be used such as a moving average audience rating of last 4 broadcasts, a moving average audience rating of last 8 broadcasts and a moving average audience rating of last 10 broadcasts.

The last N broadcasts that are targets of the moving average are not always required to be broadcasts of the same program as the prediction target program but may be various programs belonging to the same program category as that of the prediction target program. Furthermore, the program description information of each program included in the last N broadcasts may include a prescribed keyword included in the program description information of the prediction target program or a synonym therefor. A synonym for a prescribed keyword can be specified by thesaurus.

For example, a case is assumed in which the program category of a prediction target program is "professional baseball" and a keyword "all star" is included in the program description information of the prediction target program. In this case, a program that belongs to the program category "professional baseball" and has program description information including "all star" or a synonym therefor is extracted and is used for calculation of a moving average audience rating.

Also, a case is assumed in which the program category of a prediction target program is "movie" and a keyword "Princess AAA" is included in the program description information of the prediction target program. In this case, a program that belongs to the program category "movie" and has program description information including "Princess AAA" or a synonym therefor is extracted and is used for calculation of a moving average audience rating.

By categorizing all programs into a plurality of groups based on program categories and prescribed keywords and giving a different group ID to each of the groups, a moving average audience rating is easily calculated for each of the groups. In this way, by extracting the last N broadcasts based on a program category and a prescribed keyword, a moving average audience rating reflecting a characteristic of a prediction target program can be acquired. Thus, the characteristic of the program is easily reflected on the predicted audience rating 527, and the precision of the prediction improves.

The moving average audience rating on the same day of the week and the moving average audience rating on the same day of the week and the same time zone are added to the input data 526 in order to improve the precision of the prediction of the predicted audience rating 527 of an across-the-board program. The across-the-board program is a program to be broadcasted in the same time zone of a plurality of days of the week. The audience rating of the across-the-board program is not always limited to exhibit the same tendency every day but may exhibit different tendencies between days of the week in accordance with its target.

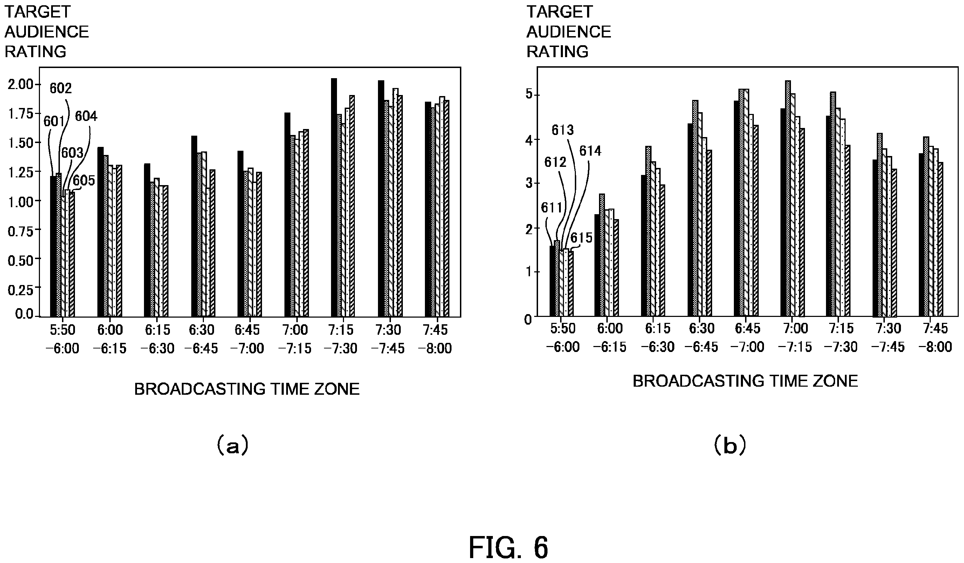

Figure 6 illustrates examples of actual audience ratings of an across-the-board program. Figure 6 has a horizontal axis indicating broadcasting time zone and a vertical axis indicating target audience rating. Figure 6(a) illustrates an example of target audience ratings of 35-49 year-old males. In each of the time zones, the bar graph 601 at the left end indicates an actual audience rating on Monday, the second bar graph 602 from the left indicates an actual audience rating on Tuesday, and the third bar graph 603 from the left indicates an actual audience rating on Wednesday. The fourth bar graph 604 from the left indicates an actual audience rating on Thursday, and the fifth bar graph 605 from the left indicates an actual audience rating on Friday.

It can be seen that the actual audience rating on Monday is the highest in the seven time zones excluding time zones of 5:50-6:00 and 7:45-8:00 among the nine time zones shown in Figure 6(a).

Figure 6(b) illustrates an example of target audience ratings of 18-34 year-old females of the same across-the-board program as that of Figure 6(a). In each of the time zones, the bar graph 611 at the left end indicates an actual audience rating on Monday, the second bar graph 612 from the left indicates an actual audience rating on Tuesday, and the third bar graph 613 from the left indicates an actual audience rating on Wednesday. The fourth bar graph 614 from the left indicates an actual audience rating on Thursday, and the fifth bar graph 615 from the left indicates an actual audience rating on Friday.

It can be seen that the actual audience rating on Tuesday is the highest in the eight time zones excluding a time zone of 6:45-7:00 among the nine time zones shown in Figure 6(b). In this way, since the audience rating of an across-the-board program exhibits different tendencies between days of the week, the differences between days of the week are not easily reflected on the predicted audience rating 527 if the moving average audience rating is calculated without distinguishing between the days of the week.

Accordingly, the calculation unit 514 selects broadcasting dates of the same day of the week as that of the prediction target date from the calendar 523 and extracts program average audience ratings of broadcasts on the selected broadcasting dates. Then, the calculation unit 514 calculates a moving average audience rating on the same day of the week and a moving average audience rating on the same day of the week and the same time zone by using the extracted program average audience rating. Thus, a moving average audience rating reflecting the program average audience ratings on the same day of the week as that of the prediction target date can be acquired, and the precision of the prediction improves.

The calculation unit 514 can exclude broadcasts on national holidays from the targets of the moving average. Because there is a tendency that audience gets up later on national holidays unlike weekdays, the peak of the audience rating in the morning is displaced to a later time than that of weekdays, and the audience ratings from daytime to evening may be higher.

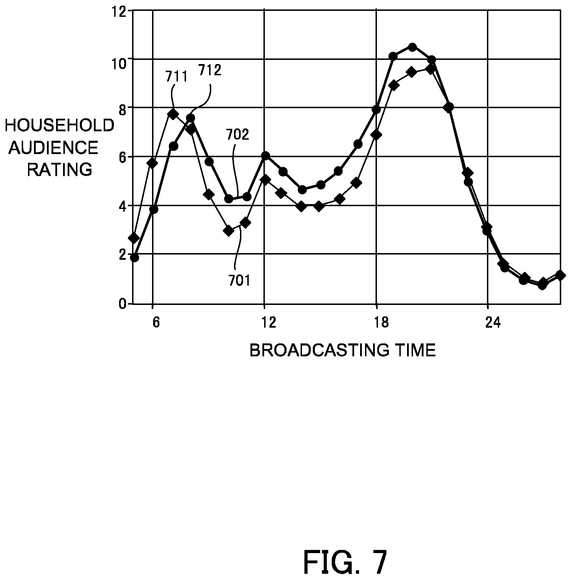

Figure 7 illustrates an example of temporal changes of actual audience ratings on a weekday and a national holiday. Figure 7 has a horizontal axis indicating broadcasting time and a vertical axis indicating household audience rating. A line chart 701 indicates an example of temporal changes of an actual audience rating on a weekday, and a line chart 702 indicates an example of temporal changes of an actual audience rating on a national holiday. A peak 712 of the line chart 702 in the morning occurs later than a peak 711 of the line chart 701, and the audience rating indicated by the line chart 702 in time zones from the noon to the evening is higher than the audience rating indicated by the line chart 701.

In this way, since the audience rating on a national holiday has a tendency different from that on a weekday, the difference between a national holiday and a weekday is not easily reflected on the predicted audience rating 527 if a moving average audience rating is calculated without distinguishing broadcasts on national holidays and broadcasts on weekdays.

For example, a case is assumed in which a prediction target program is a regular program that is broadcasted on every Monday, and Monday of October 15, 2018 is the prediction target date. In this case, October 8 one week before the prediction target date and September 17 four weeks before the prediction target date are national holidays, and September 24 three weeks before the prediction target date is a substitute holiday of a national holiday. Therefore, by calculating a moving average audience rating by including broadcasts on those national holidays and substitute holiday, a calculation result is acquired which is largely different from the moving average audience rating on weekdays only.

Accordingly, the calculation unit 514 extracts national holidays and substitute holidays from the calendar 523 as national holidays in a broad sense and excludes program average audience ratings of the programs on the extracted national holidays. Then, the calculation unit 514 calculates an immediately-near moving average audience rating, a moving average audience rating on the same day of the week and a moving average audience rating on the same day of the week and the same time zone by using the average program audience ratings of the remaining broadcasts. Thus, a moving average audience rating correctly reflecting the average program audience ratings of the broadcasts on weekdays can be acquired, and the precision of the prediction of the predicted audience rating 527 on weekdays improves.

The calculation unit 514 can perform a correction to bring the audience ratings in the morning time zone (5:00-12:00) on national holidays excluding periods of a long holiday season, the Bon festival period and the year-end and New Year holidays closer to audience ratings in the same time zone on weekdays and can calculate a program average audience rating by using the corrected audience ratings. In this case, the calculation unit 514 can calculate a moving average audience rating by including broadcasts on national holidays.

The Internet information included in the input data 526 includes, for example, the number of views of a program table and a trend word flag. The number of views of a program table indicates the number of times of viewing the program description information included in the program table on the Internet. The trend word flag is a flag indicating whether a keyword indicating a talent, a topic or the like that is currently gathering attentions is included in the program description information or not.

If a processing request received from the requesting apparatus 502 indicates a recent trend prediction of a real time audience rating, the calculation unit 514 calculates each data of the past audience ratings by using the audience rating data 524 and records it as a past audience rating of the input data 526.

The estimation unit 515 generates a precipitation pattern at each time of the prediction target date from the weather forecast data 525 by using the weather correction model 522, and the prediction unit 516 calculates a correction coefficient of each time by using the generated precipitation pattern.

Next, the prediction unit 516 generates a predicted audience rating 527 from the input data 526 by using the prediction model 521 and stores it in the storage unit 511. Then, the prediction unit 516 generates a predicted audience rating 528 by correcting the predicted audience rating 527 by using the correction coefficient and stores it in the storage unit 511. Thus, the predicted audience rating 528 can be adjusted in accordance with the amount of precipitation at each time of the prediction target date.

Next, the communication unit 512 transmits the predicted audience rating 528 to the requesting apparatus 502 as a response to the processing request. The requesting apparatus 502 performs statistics processing and so on by using the received predicted audience rating 528.

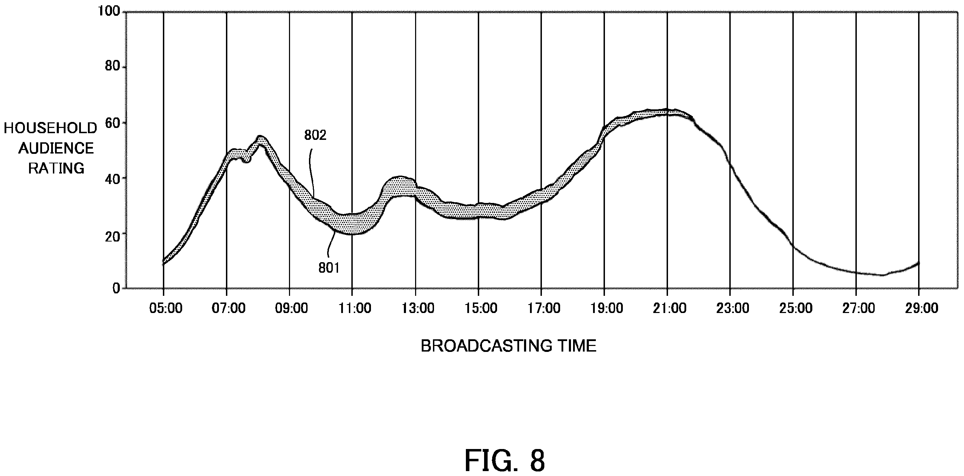

Figure 8 illustrates an example of temporal changes of actual audience ratings on a sunny day and a rainy day. Figure 8 has a horizontal axis indicating broadcasting time and a vertical axis indicating household audience rating. A curve 801 indicates an example of temporal changes of an actual audience rating on a sunny day, and a curve 802 indicates an example of temporal changes of an actual audience rating on a rainy day. In a time zone of 7:00-21:00, the audience rating on the rainy day is higher than that on the sunny day.

Accordingly, by estimating a precipitation pattern on the prediction target date from the weather forecast data 525 and correcting the predicted audience rating 527 based on the precipitation pattern, a predicted audience rating 528 that reflects the weather on the prediction target date can be acquired. Thus, the precision of the prediction of the predicted audience rating 528 improves.

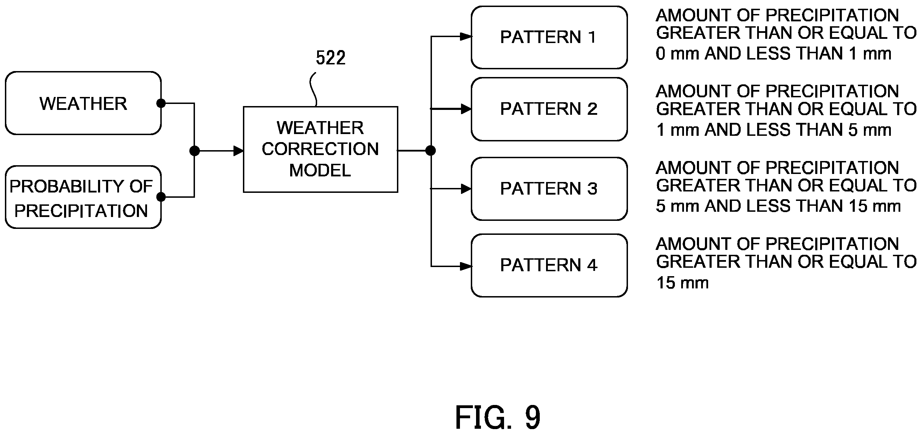

Figure 9 illustrates an example of amount-of-precipitation estimation processing by using the weather correction model 522. From the weather and a probability of precipitation at each time of the prediction target date included in the weather forecast data 525, the weather correction model 522 estimates which of patterns 1 to 4 the precipitation pattern at each time is. The precipitation pattern is estimated, for example, in minutes. The amount of precipitation of Pattern 1 is greater than or equal to 0 mm and less than 1 mm (no rain), the amount of precipitation of Pattern 2 is greater than or equal to 1 mm and less than 5 mm, the amount of precipitation of Pattern 3 is greater than or equal to 5 mm and less than 15 mm, and the amount of precipitation of Pattern 4 is greater than or equal to 15 mm.

If the precipitation pattern at each time is Pattern 3 or Pattern 4, the prediction unit 516 calculates a correction coefficient for the time by day of the week and by target. As the correction coefficient for each time, for example, a real number larger than 1 is used. Then, the prediction unit 516 calculates a predicted audience rating 528 by multiplying the predicted audience rating 527 of each target by the correction coefficient of each time corresponding to the day of the week of the prediction target date and the target of the prediction.

Because, as it is closer to the prediction target date, the weather forecast data 525 has higher precision, the correction effect is larger. Also, because younger audience tends to go out irrespective of the amount of precipitation, the correction effect is smaller. Accordingly, the prediction unit 516 may perform the correction by narrowing down to the targets and prediction target dates with a larger correction effect, instead of performing correction on all targets and all prediction target dates.

The learning unit 513 can also generate the prediction model 521 by performing ensemble learning on audience rating data to be learned. The ensemble learning is learning processing that causes a plurality of learning models having the same structure to learn the same learning data and generates a plurality of different learned models by evaluating the learning models based on the same index.

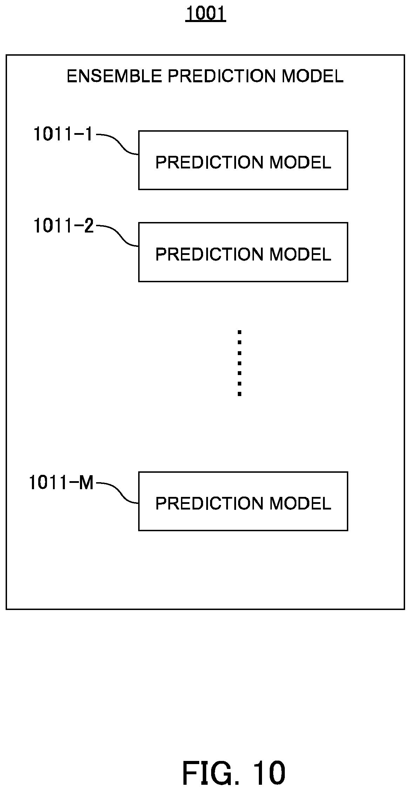

Figure 10 illustrates an example of the prediction model 521 generated by ensemble learning. An ensemble prediction model 1001 in Figure 10 is generated by ensemble learning on audience rating data to be learned and includes prediction models 1011-1 to 1011-M (M is an integer greater than or equal to 2).

The prediction models 1011-1 to 1011-M have the same structure and are generated from the same audience rating data. Each prediction model 1011-i (i=1 to M) generates a predicted audience rating from the input data 526. Then, the ensemble prediction model 1001 outputs a statistic of M predicted audience ratings generated by the prediction models 1011-1 to 1011-M as the predicted audience rating 527. As the statistic of the M predicted audience ratings, an average value, a median value, a mode or the like can be used.

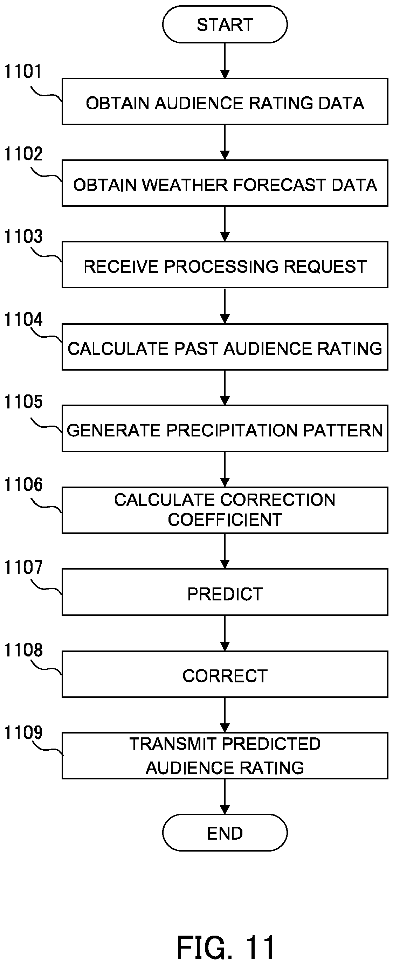

Figure 11 is a flowchart showing an example of prediction processing to be performed by the prediction apparatus 501 in Figure 5. In the prediction processing in Figure 11, recent trend prediction of a real time audience rating is performed. First, the calculation unit 514 transmits a data request to the data server 503 via the communication unit 512 and obtains audience rating data 531 from the data server 503 (step 1101). Then, the calculation unit 514 stores the obtained audience rating data 531 in the storage unit 511 as audience rating data 524.

Next, the estimation unit 515 transmits a data request to the data server 504 via the communication unit 512 and obtains weather forecast data 532 from the data server 504 (step 1102). Then, the estimation unit 515 stores the obtained weather forecast data 532 in the storage unit 511 as weather forecast data 525.

Next, the communication unit 512 receives a processing request from the requesting apparatus 502 (step 1103). Then, the calculation unit 514 calculates each data of a past audience rating by using the audience rating data 524 and records it as a past audience rating of the input data 526 (step 1104).

Here, the calculation unit 514 excludes program average audience ratings of broadcasts on national holidays and calculates an immediately-near moving average audience rating, a moving average audience rating on the same day of the week, and a moving average audience rating on the same day of the week and the same time zone by using the program average audience ratings of the remaining broadcasts. Among them, the moving average audience rating on the same day of the week and the moving average audience rating on the same day of the week and the same time zone are calculated by using program average audience ratings of the broadcasting dates of the same day of the week as the prediction target date.

Next, the estimation unit 515 generates a precipitation pattern at each time of the prediction target date from the weather forecast data 525 by using the weather correction model 522 (step 1105). Then, the prediction unit 516 calculates a correction coefficient for each time by using the generated precipitation pattern (step 1106).

Next, the prediction unit 516 generates a predicted audience rating 527 from the input data 526 by using the prediction model 521 (step 1107) and generates a predicted audience rating 528 by correcting the predicted audience rating 527 by using the correction coefficient (step 1108) . Then, the communication unit 512 transmits the predicted audience rating 528 to the requesting apparatus 502 as a response to the processing request (step 1109).

In a case where the prediction model 521 performs recent trend prediction on a time shift audience rating, the input data 526 includes, for example, program information, start time change information, day-of-week change information, broadcasting time length change information, A time information and other information. In this case, as the predicted audience rating 527, for example, a time shift audience rating is used.

The program information includes, for example, broadcast station information, a start time zone, an end time zone and day-of-week information, holiday information, a program category, and an average time shift audience rating of the last four broadcasts of a prediction target program. The program information further includes a new program flag, a rebroadcast flag, a final episode flag, a broadcasting time length category, a long-length flag, an A time flag, and a program title feature word. Among them, the broadcast station information, day-of-week information, program category, long-length flag, and A time flag are the same as those of the recent trend prediction for a real time audience rating.

The start time zone indicates a time zone to which the start time of the program belongs, and the end time zone indicates that a time zone to which the end time of the program belongs. The start time zone and end time zone are, for example, set in units of 30 minutes. The holiday information indicates that the prediction target date is a holiday (Saturday, Sunday, national holiday), the day before the holiday, or the next day of the holiday. The average time shift audience rating of the last four broadcasts indicates an average value of time shift audience ratings of the last four broadcasts.

The new program flag is a flag indicating whether "new" is included in the title of the program or not. The rebroadcast flag is a flag indicating whether "again" is included in the title of the program. The final episode flag is a flag indicating whether "final" is included in the title of the program. The broadcasting time length category indicates a category to which the broadcasting time length of the program belongs. The examples of the broadcasting time length category include a time shorter than or equal to 5 minutes, a time longer than 5 minutes and shorter than or equal to 10 minutes, a time longer than 10 minutes and shorter than or equal to 30 minutes, a time longer than 30 minutes and shorter than or equal to 60 minutes, a time longer than 60 minutes and shorter than or equal to 90 minutes, and a time longer than 90 minutes and shorter than or equal to 110 minutes.

The program title feature word indicates a distinctive word included in the program title. As the distinctive word, for example, a word is used that contributes to improvement of the precision of prediction of the prediction model 521 in a simulation of a recent trend prediction of a time shift audience rating.

A start time change, a day-of-week change and a broadcasting time length change occur because of a change of the scheduling of a special program or an irregular program. For example, a program that is normally broadcasted in a midnight time zone on Monday may be broadcasted in the A time on Saturday as a special program.

The start time change information includes a mode of start times, a start minute, a median value of the start minutes and an absolute value. The mode of start times indicates a mode of start times of the last four broadcasts. The start minute indicates a minute corresponding to the start time in a case where one day is divided into 1 to 1440 minutes. The median value of the start minutes indicates a median value of the start minutes of the last four broadcasts. The absolute value indicates an absolute value of a difference between the start minute and the median value of the start minutes.

The day-of-week change information includes a mode of days of the week and a change pattern. The mode of days of the week indicates the most frequently appearing day of the week of the last four broadcasting days of the week. The change pattern indicates an aspect of changes of the most frequently appearing day of the week and the broadcasting day of the week. The broadcasting time length change information includes a median value of the broadcasting time lengths and a change ratio. The median value of the broadcasting time lengths indicates a median value of the last four broadcasting time lengths. The change ratio indicates a change ratio of the broadcasting time length compared with the median value.

The A time information includes an A time proportion, an A time inflow timeslot flag, and an A time outflow timeslot flag. The A time inflow indicates that the broadcasting time zone excluding the A time is changed to the A time, and the A time outflow indicates that the broadcasting time zone of the A time is changed to a time zone excluding the A time. The A time proportion indicates a proportion of broadcasts of the program that are performed in the A time among the last four broadcasts. For example, when three of four broadcasts are performed in the A time, the A time proportion is 0.75.

The A time inflow timeslot flag indicates whether the prediction target program satisfies an A time inflow condition or not. The A time inflow condition indicates that the A time proportion is lower than or equal to 0.5 and the scheduled broadcasting time zone of the prediction target program is the A time. The A time outflow timeslot flag indicates that the prediction target program satisfies an A time outflow condition or not. The A time outflow condition indicates that the A time proportion is higher than or equal to 0.5 and the scheduled broadcasting time zone of the prediction target program is a time zone other than the A time.

The other information includes the number of national holidays and a broadcasting interval. The number of national holidays indicates the number of national holidays included in a period from the current time to the prediction target date. The broadcasting interval indicates the number of days from the last broadcasting date to the prediction target date.

In a case where the prediction model 521 performs long-term trend prediction of a real time audience rating, the input data 526 includes, for example, program information and past audience ratings, and, for example, an average audience rating every prescribed time is used as the predicted audience rating 527. The prescribed time may be 10 minutes.

The program information includes, for example, a holiday flag and a day-before-holiday flag. The holiday flag is a flag indicating whether the prediction target date is a holiday or not. The day-before-holiday flag is a flag indicating whether the prediction target date is a day before a holiday or not.

The past audience ratings include, for example, past audience ratings for immediately near 30 days, an average audience rating of the last four weeks, an average audience rating of the last eight weeks, an average audience rating of the last 12 weeks, and an average audience rating of the last 24 weeks. The past audience ratings for immediately near 30 days indicate an average audience rating every prescribed time for immediately near 30 days.

The average audience rating of the last four weeks indicates an average audience rating every prescribed time for the last four weeks of the same day of the week as that of the prediction target date. The average audience rating of the last eight weeks indicates an average audience rating every prescribed time for the last eight weeks of the same day of the week as that of the prediction target date. The average audience rating of the last 12 weeks indicates an average audience rating every prescribed time for the last 12 weeks of the same day of the week as that of the prediction target date. The average audience rating of the last 24 weeks indicates an average audience rating every prescribed time for the last 24 weeks of the same day of the week as that of the prediction target date.

The configurations of the prediction apparatus 101 in Figure 1, the prediction apparatus 201 in Figure 2, the prediction apparatus 301 in Figure 3 and the prediction apparatus 401 in Figure 4 are merely examples, and partial constituent elements may be omitted or changed in accordance with the use or condition of the prediction apparatus.

The configuration of the prediction system in Figure 5 is merely an example, and partial constituent elements may be omitted or changed in accordance with the use or condition of the prediction system. For example, in a case where, in the prediction apparatus 501, the prediction model 521 and the weather correction model 522 are stored in advance in the storage unit 511, the learning unit 513 can be omitted. In a case where the predicted audience rating 527 is not corrected, the estimation unit 515 can be omitted.

The flowchart in Figure 11 is merely an example, and partial processing may be omitted or changed in accordance with the configuration or condition of the prediction system. For example, in a case where the predicted audience rating 527 is not corrected, the processing in step 1102, step 1105, step 1106, and step 1108 can be omitted.

The actual audience ratings shown in Figures 6 to 8 are merely examples, and the actual audience ratings change in accordance with the program, the target, the broadcasting date and so on. The amount-of-precipitation estimation processing shown in Figure 9 is merely an example, and an amount of precipitation may be estimated by different amount-of-precipitation estimation processing. For example, the estimation unit 515 may calculate an amount of precipitation from the probability of precipitation at each time of the prediction target date by using a prescribed formula instead of the weather correction model 522. The ensemble prediction model 1001 shown in Figure 10 is merely an example, and another ensemble prediction model may be used.

Each of the items of the input data 526 in the recent trend prediction of a real time audience rating, the recent trend prediction of a time shift audience rating and the long-term trend prediction of a real time audience rating described above is merely an example. Partial items of the input data 526 may be omitted or changed in accordance with the use or condition of the prediction system.

The prediction target broadcast information may be a program or a CM of television broadcasting or a program or a CM of radio broadcasting or Internet broadcasting. As the broadcast contact information, other indices indicating viewing or listening actions of audience can be used instead of a audience rating. Examples of the other indices include an amount of viewing or listening time, the number of audience households, the number of viewing or listening people, and the number of times of viewing or listening within a prescribed period.

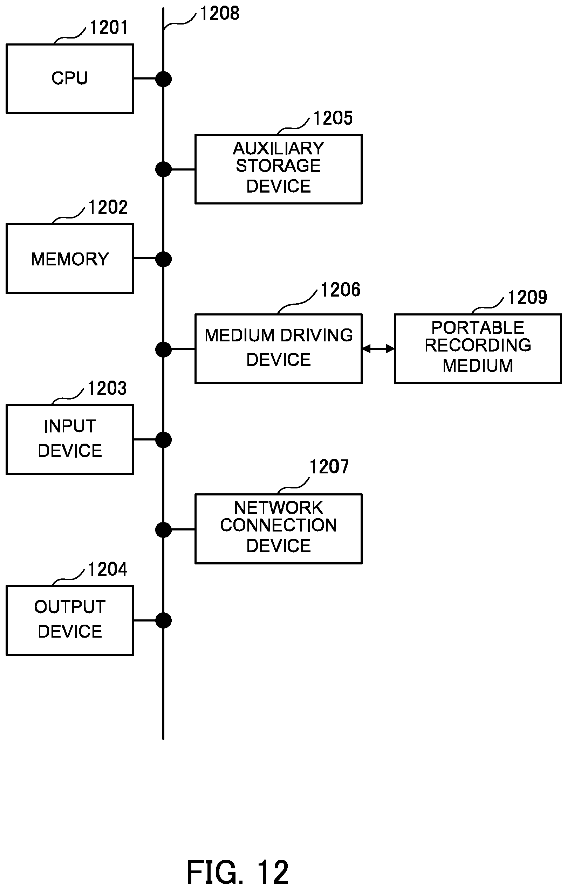

Figure 12 illustrates a hardware configuration example of an information processing apparatus that is used as the prediction apparatus 101 in Figure 1, the prediction apparatus 201 in Figure 2, the prediction apparatus 301 in Figure 3, the prediction apparatus 401 in Figure 4 and the prediction apparatus 501 in Figure 5. The information processing apparatus in Figure 12 includes a central processing unit (CPU) 1201, a memory 1202, an input device 1203, an output device 1204, an auxiliary storage device 1205, a medium driving device 1206, and a network connection device 1207. These constituent elements are hardware and are connected to each other via a bus 1208.

The memory 1202 is, for example, a semiconductor memory such as a read only memory (ROM), a random access memory (RAM) and a flash memory and stores a program and data to be used for processing. The memory 1202 can be used as the storage unit 111 in Figure 1, the storage unit 211 in Figure 2, the storage unit 311 in Figure 3, the storage unit 411 in Figure 4, or the storage unit 511 in Figure 5.

The CPU 1201 (processor) operates as the calculation unit 112 and the prediction unit 113 in Figure 1 by, for example, executing a program by using the memory 1202. The CPU 1201 also operates as the calculation unit 212 and the prediction unit 213 in Figure 2 by executing a program.

The CPU 1201 also operates as the calculation unit 312 and the prediction unit 313 in Figure 3 by executing a program. The CPU 1201 also operates as the estimation unit 412 and the prediction unit 413 in Figure 4 by executing a program. The CPU 1201 also operates as the learning unit 513, the calculation unit 514, the estimation unit 515 and the prediction unit 516 in Figure 5 by executing a program.

The input device 1203 is, for example, a keyboard, a pointing device or the like and is used for inputting an instruction or information from an operator or a user. The output device 1204 is, for example, a display device, a printer, a speaker or the like and is used for outputting an inquiry or an instruction and a processing result to an operator or a user. The processing result may be the predicted audience rating 528.

The auxiliary storage device 1205 is, for example, a magnetic disk device, an optical disk device, a magnetooptical disk device, a tape device or the like. The auxiliary storage device 1205 may be a hard disk drive or a flash memory. The information processing apparatus can store a program and data in the auxiliary storage device 1025, load them to the memory 1202 and use them. The auxiliary storage device 1205 can be used as the storage unit 111 in Figure 1, the storage unit 211 in Figure 2, the storage unit 311 in Figure 3, the storage unit 411 in Figure 4, or the storage unit 511 in Figure 5.

The medium driving device 1206 drives a portable recording medium 1209 and accesses data recorded therein. The portable recording medium 1209 is a memory device, a flexible disk, an optical disk, a magnetooptical disk or the like. The portable recording medium 1209 may be a compact disk read only memory (CD-ROM), a digital versatile disk (DVD), a universal serial bus (USB) memory or the like. An operator or a user can store a program and data in the portable recording medium 1209, load them to the memory 1202 and use them.

In this way, a computer-readable recording medium that stores a program and data to be used for processing is a physical (non-transitory) recording medium such as the memory 1202, the auxiliary storage device 1205 or the portable recording medium 1209.

The network connection device 1207 is a communication interface circuit that is connected to the communication network 505 and performs data conversion involved in communication. The information processing apparatus can receive a program and data from an external apparatus via the network connection device 1207, load them to the memory 1202 and use them. The network connection device 1207 can be used as the communication unit 512 in Figure 5.

It should be noted that the information processing apparatus need not include all of the constituent elements in Figure 12, but partial constituent elements can be omitted in accordance with a use or a condition. For example, in a case where no interface with an operator or a user is required, the input device 1203 and the output device 1204 may be omitted. In a case where the portable recording medium 1209 or the communication network is not used, the medium driving device 1206 or the network connection device 1207 may be omitted.

The information processing apparatus in Figure 12 can be used as the requesting apparatus 502, data server 503 and data server 504 in Figure 5.

Having described in detail the embodiments of the present disclosure and their advantages, it would be understood that those skilled in the art can make various changes, additions and omissions thereto without departing from the scope clearly described in the claims.

### [Description of Reference Numerals]

101, 201, 301, 401, 501 prediction apparatus
111, 211, 311, 411, 511 storage unit
112, 212, 312, 514 calculation unit
113, 213, 313, 413, 516 prediction unit
121, 222, 322, 421 broadcast contact information
221, 321 calendar information
412, 515 estimation unit
422 weather forecast information
502 requesting apparatus
503, 504 data server
505 communication network
512 communication unit
513 learning unit
521, 1011-1 to 1011-M prediction model
522 weather correction model
523 calendar
524, 531 audience rating data
525, 532 weather forecast data
526 input data
527, 528 predicted audience rating
531 audience rating data
601 to 605, 611 to 615 bar graph
701, 702 line chart
711, 712 peak
801, 802 curve
1001 ensemble prediction model
1201 CPU
1202 memory
1203 input device
1204 output device
1205 auxiliary storage device
1206 medium driving device
1207 network connection device
1208 bus
1209 portable recording medium

## Claims

1. A prediction apparatus comprising:
a storage unit that stores broadcast contact information indicating a degree of contact from receivers for each of a plurality of pieces of broadcast information broadcasted by a broadcast medium;
a calculation unit that calculates a statistic by using broadcast contact information of first broadcast information included in the plurality of pieces of broadcast information and broadcast contact information of second broadcast information broadcasted after the first broadcast information, the statistic having a larger contribution of the broadcast contact information of the second broadcast information than a contribution of the broadcast contact information of the first broadcast information; and
a prediction unit that determines predicted contact information indicating a degree of contact from receivers for broadcasting-scheduled broadcast information based on the statistic.

2. The prediction apparatus according to claim 1, wherein the plurality of pieces of broadcast information and the broadcasting-scheduled broadcast information are broadcast programs belonging to a prescribed category of a plurality of broadcast program categories, and program description information of each of the plurality of pieces of broadcast information and the broadcasting-scheduled broadcast information includes a prescribed keyword or a synonym for the prescribed keyword.

3. The prediction apparatus according to claim 1 or 2, wherein the statistic is a weighted moving average of broadcast contact information of each of the plurality of pieces of broadcast information, and a weight of the weighted moving average is larger for broadcast information to be broadcasted on a later broadcasting date.

4. The prediction apparatus according to any one of claims 1 to 3, wherein the prediction unit determines the predicted contact information by using a prediction model generated by machine learning on broadcast contact information to be learned.

5. A prediction method comprising:
by a computer,
calculating a statistic by using, in broadcast contact information indicating a degree of contact from receivers for each of a plurality of pieces of broadcast information broadcasted by a broadcast medium, broadcast contact information of first broadcast information included in the plurality of pieces of broadcast information and broadcast contact information of second broadcast information broadcasted after the first broadcast information, the statistic having a larger contribution of the broadcast contact information of the second broadcast information than a contribution of the broadcast contact information of the first broadcast information; and
determining predicted contact information indicating a degree of contact from receivers for broadcasting-scheduled broadcast information based on the statistic.

6. A prediction program for causing a computer to execute a process comprising:
calculating a statistic by using, in broadcast contact information indicating a degree of contact from receivers for each of a plurality of pieces of broadcast information broadcasted by a broadcast medium, broadcast contact information of first broadcast information included in the plurality of pieces of broadcast information and broadcast contact information of second broadcast information broadcasted after the first broadcast information, the statistic having a larger contribution of the broadcast contact information of the second broadcast information than a contribution of the broadcast contact information of the first broadcast information; and
determining predicted contact information indicating a degree of contact from receivers for broadcasting-scheduled broadcast information based on the statistic.

7. A prediction apparatus comprising:
a storage unit that stores calendar information including a national holiday and broadcast contact information indicating a degree of contact from receivers for each of a plurality of pieces of broadcast information broadcasted by a broadcast medium;
a calculation unit that excludes broadcast contact information of broadcast information broadcasted on the national holiday from the broadcast contact information of each of the plurality of pieces of broadcast information and calculates a statistic by using broadcast contact information of first broadcast information of remaining broadcast contact information and broadcast contact information of second broadcast information broadcasted after the first broadcast information;
a prediction unit that determines predicted contact information indicating a degree of contact from receivers for broadcasting-scheduled broadcast information based on the statistic.

8. The prediction apparatus according to claim 7, wherein the plurality of pieces of broadcast information and the broadcasting-scheduled broadcast information are broadcast programs belonging to a prescribed category of a plurality of broadcast program categories, and program description information of each of the plurality of pieces of broadcast information and the broadcasting-scheduled broadcast information includes a prescribed keyword or a synonym for the prescribed keyword.

9. The prediction apparatus according to claim 7 or 8, wherein the statistic is a simple moving average or a weighted moving average of broadcast contact information of each of the plurality of pieces of broadcast information, and a weight of the weighted moving average is larger for broadcast information to be broadcasted on a later broadcasting date.

10. The prediction apparatus according to any one of claims 7 to 9, wherein the prediction unit determines the predicted contact information by using a prediction model generated by machine learning on broadcast contact information to be learned.

11. A prediction method comprising:
by a computer,
excluding, from broadcast contact information indicating a degree of contact from receivers for each of a plurality of pieces of broadcast information broadcasted by a broadcast medium, broadcast contact information of broadcast information broadcasted on a national holiday indicated by calendar information;
calculating a statistic by using broadcast contact information of first broadcast information of remaining broadcast contact information and broadcast contact information of second broadcast information broadcasted after the first broadcast information; and
determining predicted contact information indicating a degree of contact from receivers for broadcasting-scheduled broadcast information based on the statistic.

12. A prediction program for causing a computer to execute a process comprising:
excluding, from broadcast contact information indicating a degree of contact from receivers for each of a plurality of pieces of broadcast information broadcasted by a broadcast medium, broadcast contact information of broadcast information broadcasted on a national holiday indicated by calendar information;
calculating a statistic by using broadcast contact information of first broadcast information of remaining broadcast contact information and broadcast contact information of second broadcast information broadcasted after the first broadcast information; and
determining predicted contact information indicating a degree of contact from receivers for broadcasting-scheduled broadcast information based on the statistic.

13. A prediction apparatus comprising:
a storage unit that stores calendar information including a plurality of days of week and broadcast contact information indicating a degree of contact from receivers for each of a plurality of pieces of broadcast information broadcasted by a broadcast medium on broadcasting dates including the plurality of days of week;
a calculation unit that extracts broadcast contact information of pieces of broadcast information broadcasted on a prescribed day of week among the plurality of days of week from the broadcast contact information of each of the plurality of pieces of broadcast information and calculates a statistic by using broadcast contact information of first broadcast information of extracted broadcast contact information and broadcast contact information of second broadcast information broadcasted after the first broadcast information; and
a prediction unit that determines predicted contact information indicating a degree of contact from receivers for broadcasting-scheduled broadcast information to be broadcasted on the prescribed day of week based on the statistic.

14. The prediction apparatus according to claim 13, wherein the statistic is a simple moving average or a weighted moving average of broadcast contact information of each of the plurality of pieces of broadcast information, and a weight of the weighted moving average is larger for broadcast information to be broadcasted on a later broadcasting date.

15. The prediction apparatus according to claim 13 or 14, wherein the prediction unit determines the predicted contact information by using a prediction model generated by machine learning on broadcast contact information to be learned.

16. A prediction method comprising:
by a computer,
extracting, from broadcast contact information indicating a degree of contact from receivers for each of a plurality of pieces of broadcast information broadcasted by a broadcast medium on broadcasting dates including a plurality of days of week indicated by calendar information, broadcast contact information of pieces of broadcast information broadcasted on a prescribed day of week among the plurality of days of week;
calculating a statistic by using broadcast contact information of first broadcast information of extracted broadcast contact information and broadcast contact information of second broadcast information broadcasted after the first broadcast information; and
determining predicted contact information indicating a degree of contact from receivers for broadcasting-scheduled broadcast information to be broadcasted on the prescribed day of week based on the statistic.

17. A prediction program for causing a computer to execute a process comprising:
extracting, from broadcast contact information indicating a degree of contact from receivers for each of a plurality of pieces of broadcast information broadcasted by a broadcast medium on broadcasting dates including a plurality of days of week indicated by calendar information, broadcast contact information of pieces of broadcast information broadcasted on a prescribed day of week among the plurality of days of week;
calculating a statistic by using broadcast contact information of first broadcast information of extracted broadcast contact information and broadcast contact information of second broadcast information broadcasted after the first broadcast information; and
determining predicted contact information indicating a degree of contact from receivers for broadcasting-scheduled broadcast information to be broadcasted on the prescribed day of week based on the statistic.

18. A prediction apparatus comprising:
a storage unit that stores broadcast contact information indicating a degree of contact from receivers for each of a plurality of pieces of broadcast information broadcasted by a broadcast medium and weather forecast information indicating a weather on a scheduled broadcasting date on which broadcasting-scheduled broadcast information is to be broadcasted;
an estimation unit that estimates an amount of precipitation on the scheduled broadcasting date based on the weather forecast information; and
a prediction unit that determines predicted contact information indicating a degree of contact from receivers for the broadcasting-scheduled broadcast information based on the broadcast contact information of each of the plurality of pieces of broadcast information and the amount of precipitation on the scheduled broadcasting date.

19. The prediction apparatus according to claim 18, wherein the prediction unit determines pre-correction contact information indicating a degree of contact from receivers for the broadcasting-scheduled broadcast information based on the broadcast contact information of each of the plurality of pieces of broadcast information, calculates a correction coefficient by using the amount of precipitation on the scheduled broadcasting date, and determines the predicted contact information by using the pre-correction contact information and the correction coefficient.

20. The prediction apparatus according to claim 18 or 19, wherein the prediction unit determines the predicted contact information by using a prediction model generated by machine learning on broadcast contact information to be learned.

21. A prediction method comprising:
by a computer,
estimating an amount of precipitation on a scheduled broadcasting date based on weather forecast information indicating a weather on the scheduled broadcasting date on which broadcasting-scheduled broadcast information is to be broadcasted; and
determining predicted contact information indicating a degree of contact from receivers for the broadcasting-scheduled broadcast information based on broadcast contact information indicating a degree of contact from receivers for each of a plurality of pieces of broadcast information broadcasted by a broadcast medium and the amount of precipitation on the scheduled broadcasting date.

22. A prediction program for causing a computer to execute a process comprising:
estimating an amount of precipitation on a scheduled broadcasting date based on weather forecast information indicating a weather on the scheduled broadcasting date on which broadcasting-scheduled broadcast information is to be broadcasted; and
determining predicted contact information indicating a degree of contact from receivers for the broadcasting-scheduled broadcast information based on broadcast contact information indicating a degree of contact from receivers for each of a plurality of pieces of broadcast information broadcasted by a broadcast medium and the amount of precipitation on the scheduled broadcasting date.
